# EUROPÄISCHE PATENTSCHRIFT

(11) **EP 2 550 516 B1**
(45) Veröffentlichungstag und Bekanntmachung des Hinweises auf die Patenterteilung: **06.12.2017**
(21) Anmeldenummer: 11708297.4
(22) Anmeldetag: 16.03.2011
(51) Int. Cl.: G01K 1/14, G01K 1/16, G01K 13/10

(54) **ENERGIESPEICHERSYSTEM UND VORRICHTUNG ZUR MESSUNG DER TEMPERATUR UND SPANNUNG AN EINER ELEKTRISCHEN / ELEKTRONISCHEN KOMPONENTE**
ENERGY STORAGE SYSTEM AND DEVICE TO MEASURE THE TEMPERTAURE AND THE VOLTAGE OF AN ELECTRIC/ELECTRONIC COMPONENT
SYSTÈME D'ACCUMULATION D'ÉNERGIE ET UNITÉ DE MESURE DE LA TEMPÉRATURE ET DE LA TENSION D'UN COMPOSANT ELECTRIQUE/ELECTRONIQUE

(30) Priorität: 30.09.2010 DE 102010046992; 22.03.2010 DE 102010012344
(43) Veröffentlichungstag der Anmeldung: 30.01.2013
(73) Patentinhaber: Continental Automotive GmbH, 30165 Hannover (DE)
(72) Erfinder: FISCHER, Georg, 93051 Regensburg (DE); SCHMID, Thomas, 93051 Regensburg (DE); SCHNEEBERGER, Johann, 93133 Burglengenfeld (DE)
(86) Internationale Anmeldenummer: PCT/EP2011/053946
(87) Internationale Veröffentlichungsnummer: WO 2011/117124

(56) Entgegenhaltungen:
- JP-A- 2006 032 184
- JP-A- 2006 250 734
- US-A1- 2009 322 284

## Beschreibung

Die vorliegende Erfindung betrifft ein Energiespeichersystem mit zumindest einer Energiespeicherzelle und einem Verbindungselement zur Herstellung einer elektrischen Verbindung zur Energiespeicherzelle. Ferner betrifft die Erfindung eine Vorrichtung zur Messung der Temperatur und Spannung an einer elektrischen / elektronischen Komponente.

Gattungsgemäße Energiespeichersysteme finden ihre Anwendungen insb. in Fahrzeugen mit Elektro- oder Hybridantrieb als Stromquelle für elektrischen Antrieb des Fahrzeugs oder zum Betreiben von elektrischen Fahrzeugkomponenten.

Derartige Energiespeichersysteme enthalten je nach Ausführung eine oder mehrere Energiespeicherzellen, deren Lade- und Entladevorgänge von Mess- und Steuermodulen überwacht und gesteuert. Um diese von Umwelteinflüssen zu schützen, werden die Mess- und Steuermodule direkt innerhalb des Energiespeichersystems eingesetzt.

Die Mess- und Steuermodule werden in der Regel auf einer flexiblen Leiterplatte implementiert. Eine flexible Leiterplatte besteht in der Regel aus einer Basis- und Deckfolie aus Polyamid als Basis- und Deckschicht, dazwischen eingebettet befinden sich leitende Kupferbahnen als Leiterbahnen. Durch Einsatz eines Acryl-Klebers in Form von Kleberschicht zwischen den Schichten entsteht eine feste Einheit (siehe Figur 1) . Beispiele sind in JP 2006 032184 A und JP 2006 250734 A zu finden. Wegen den hohen Anforderungen an Sicherheit und Wirtschaftlichkeit bei den Energiespeichersystemen ist es erforderlich, bei Lade- und Entladevorgängen der einzelnen Energiespeicherzellen die dazugehörige Zellentemperatur zu erfassen.

Eine Temperaturmessung mit Hilfe von standardmäßigen Temperatursensorfühlern direkt an den Energiespeicherzellen oder in naher Umgebung der Energiespeicherzellen ist mit einem hohen Fertigungsaufwand und damit gebundenen Mehrkosten gebunden.

Die Aufgabe der vorliegenden Erfindung liegt somit darin, ein Energiespeichersystem der eingangs genannten Art so zu modifizieren, dass eine Zellentemperaturmessung bei den Energiespeicherzellen ohne oben genannten Aufwand und Mehrkosten mit einer vergleichbar höheren Messgenauigkeit möglich ist.

Diese Aufgabe wird durch ein Energiespeichersystem mit einer flexiblen Leiterplatte zur Überwachung der Energiespeicherzelle gelöst, wobei diese flexible Leiterplatte mit dem Verbindungselement über eine erste Kontaktfläche kontaktiert bzw. verbunden ist. Dabei ist diese erste Kontaktfläche ein Teil der Leiterbahn der flexiblen Leiterplatte und so ausgebildet, dass diese Kontaktfläche die Wärme von der Energiespeicherzelle aufnimmt. An dieser ersten Kontaktfläche weist die flexible Leiterplatte einen Temperatursensor auf, wobei dieser Temperatursensor mit der ersten Kontaktfläche über eine wärmeleitende Kontaktstelle kontaktiert ist und die Temperatur an der ersten Kontaktfläche erfasst.

Das Verbindungselement kann dabei ein Zellableiter (Zell-Ableitblech) sein, das die Energiespeicherzelle also Batteriezelle mit einer weiteren Batteriezelle oder mit dem elektrischen Anschluss des Energiespeichersystems elektrisch verbindet und zur Herstellung elektrischer Verbindung bzw. zur Übertragung von elektrischer Spannung oder elektrischem Strom dient. Das Verbindungselement kann aber auch ein elektrischer Anschluss der Energiespeicherzelle somit ein Bestandsteil der Energiespeicherzelle sein. Das Verbindungsteil besteht aus Metall wie Aluminium und weist somit eine hohe Wärmeleitfähigkeit auf.

Die Zellentemperatur kann direkt durch das Verbindungselement und die Kupfer-Leiterbahn der flexiblen Leiterplatte auf das zu sensierende Element also auf den Temperatursensor geleitet werden. Durch die nahe Platzierung des Temperatursensors im Bereich der Schnittstellenanbindung an die Energiespeicherzelle wird einerseits eine hohe Integration der flexiblen Leiterplatte im Energiespeichersystem und andererseits eine Einsparung an zusätzlichen Kontaktstellen gegenüber einer extra Anbindung durch z. B. Kabeln erzielt. Dadurch können Fertigungsaufwand und damit verbundene Mehrkosten gespart werden. Durch die Platzierung des Temperatursensors in direkter Umgebung der zu messenden Energiespeicherzelle wird die Messgenauigkeit erhöht.

Durch die erfindungsgemäße Modifikation ist ein Energiespeichersystem mit einer erhöhten Integrationstiefe der flexiblen Leiterplatte und einer geringeren Anzahl von Kontaktierstellen geschaffen, wodurch Kosten für das Energiespeichersystem gesenkt und mögliche Ausfälle durch Kontaktprobleme verringert bzw. ausgeschlossen werden können. Direkte Kontaktierung des zu sensierenden Bauteiles (Batteriezelle) ermöglicht eine direkte und schnelle Temperaturmessung somit auch eine höhere Messgenauigkeit.

Die flexible Leiterplatte ist mit dem Verbindungselement über eine zweite Kontaktfläche kontaktiert bzw. verbunden, wobei diese zweite Kontaktfläche ebenfalls ein Teil der Leiterbahn der flexiblen Leiterplatte ist, aber zur Messung des Spannungspotentials oder des Stroms am Verbindungselement dient. Dabei sind die erste und zweite Kontaktfläche durch einen zwischen diesen beiden Kontaktflächen angeordneten, durchgehenden Schlitz in der flexiblen Leiterplatte voneinander getrennt.

Die Durchtrennung der zweiten Kontaktfläche zur Messung vom Spannungspotential oder Strom von der ersten Kontaktfläche zur Zellentemperaturmessung hat den Vorteil, dass die erste und zweite Kontaktfläche thermisch so voneinander getrennt werden können, dass der thermische Widerstand und die thermische Kapazität der zweiten Kontaktfläche die Temperatur der ersten Kontaktfläche nur minimal beeinflussen kann. Damit kann die thermische Kapazität und die thermische Leitfähigkeit der ersten Kontaktfläche klein gehalten werden und sie kann schnell und genau die Temperatur des Zellableiters einnehmen, während die zweite Kontaktfläche einen wesentlich stärkeren Temperaturgradienten vom Zellableiter zur Leiterplatte und dessen Elektronikkomponenten hin aufweisen kann. Die thermische Isolation des Temperatursensors wird auch durch eine entsprechende Gestaltung des Layouts der Leiterplatte unterstützt, bei der ein Wärmeübergang vom Sensor zur Elektronik möglichst unterbunden wird.

In einer weiteren bevorzugten Ausführungsform ist die dem Verbindungselement zugewandte Seite der ersten und/oder zweiten Kontaktfläche der flexiblen Leiterplatte von der Deck- oder Basisschicht befreit, sodass die Seite der ersten Kontaktfläche die Wärme vom Verbindungselement besser aufnimmt bzw. die Seite der zweiten Kontaktfläche mit dem Verbindungselement elektrisch kontaktiert ist.

Vorzugsweise weist die Deck- oder Basisschicht der flexiblen Leiterplatte an der ersten Kontaktfläche eine Aussparung auf, wobei in dieser Aussparung der Temperatursensor angeordnet ist.

Weiterhin werden die Kupfer-Leiterbahnen auf der flexiblen Leiterplatte in geeigneter Art und Weise ausgebildet, sodass die Wärme von der Messstelle weg- und zum Temperatursensor hingeleitet wird, der wiederum an einem Teil der flexiblen Leiterplatte positioniert ist, in der die Biegebelastung für dessen Lötanschluss ausreichend gering ist.

Die erfindungsgemäße Messung von Temperatur und Spannung/Strom von einer Batteriezelle kann auch für andere elektrischen / elektronischen Komponenten angewendet werden, wo eine störungsfreie Messung von Temperatur und Spannung/Strom verwendet werden.

Im Folgenden wird die Erfindung anhand eines Ausführungsbeispiels unter Zuhilfenahme von Figuren näher erläutet. Als Beispiel dient dabei ein Energiespeichersystem für ein Hybridfahrzeug. In den Figuren werden nur die Komponenten schematisch dargestellt, welche für die Beschreibung des erfindungsgemäßen Energiespeichersystems erforderlich sind. Je nach Ausführung kann ein erfindungsgemäßes Energiespeichersystem weitere Komponenten aufweisen, welche in den folgenden Figuren nicht dargestellt werden. Es zeigen,
Figur 1 die flexible Leiterplatte des erfindungsgemäßen Energiespeichersystems in einer Querschnittdarstellung,
Figur 2 das erfindungsgemäße Energiespeichersystem in einer schematischen Darstellung, und
Figur 3 eine detaillierte Darstellung des Abschnitts A von der Figur 2.

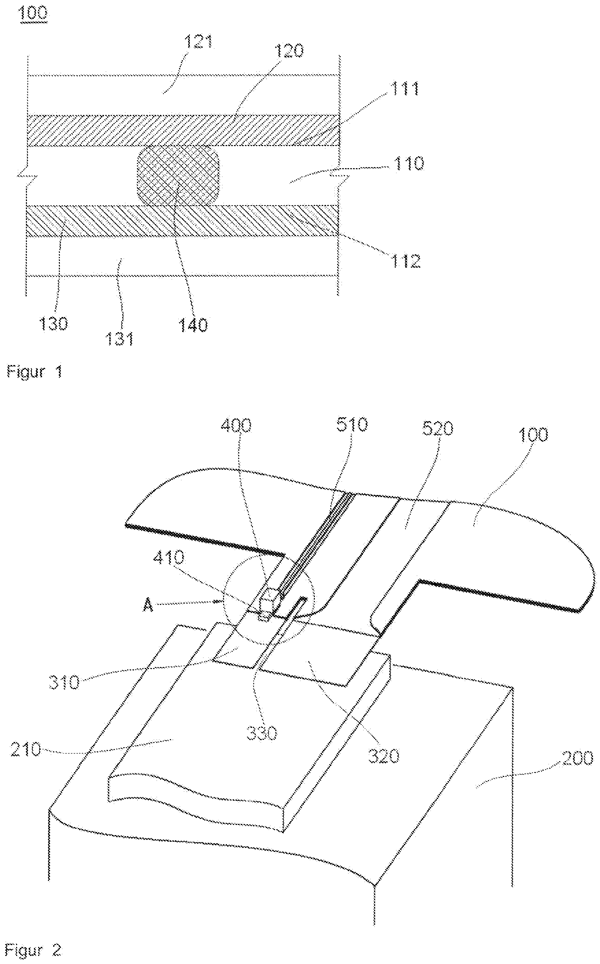

Die flexible Leiterplatte 100 des Energiespeichersystems gemäß der Figur 1 weist jeweils eine Basis- und Deckschicht 130, 120 und eine dazwischen eingebettete Kupferbahnen als Leiterbahnen 110. Optional weist eine Dichtungsschicht 121 auf der Deckschicht 120 und eine Trägerschicht 131 auf der Basisschicht 130 auf.

Die verschiedenen Schichten 110, 120, 130 sind bspw. von zwischen diesen Schichten angebrachten Klebeschichten 140 zueinander fest verbunden.

Das Energiespeichersystem weist gemäß der Figur 2 eine oben beschriebene flexible Leiterplatte 100 als Träger von Mess- und Steuerelektronik für die Batteriezelle 200 also als die Vorrichtung zur Messung der Temperatur und Spannung an einer elektrischen Komponente (hier die Energiespeicherzelle 200) auf.

Ferner weist das System ein Verbindungselement 210 auf, welches die Batteriezelle 200 mit einer weiteren Batteriezelle oder mit dem Stromversorgungsanschluss des Systems elektrisch verbindet. Das Verbindungselement 210, welches auch Anbindungselement oder Zell-Ableitblech genannt wird, besteht aus einem niederohmigen und wärmeleitenden Material und ist mit dem Minus- bzw. Pluspol der Batteriezelle 200 direkt verbunden bspw. gelötet.

Aus der Temperatur bzw. aus dem Spannungspotential am Verbindungselement 210 lassen sich die Rückschlüsse auf die Zellentemperatur bzw. den Spannungspotential am Anschlusspol der Batteriezelle 200 ziehen.

Die Leiterplatte 100 ist über 2 Kontaktflächen 310, 320 mit dem Verbindungselement 210 fest verbunden bspw. gelötet oder geschweißt. Die beiden Kontaktflächen 310, 320 sind durch einen durchgehenden Schlitz 330 voneinander seitlich getrennt. Die dem Verbindungselement 210 zugewandte Seite der beiden Kontaktflächen 310, 320 ist von der Basisschicht 130 und der eventuell vorhandenen Trägerschicht 131 befreit, sodass die darunter liegenden Leiterbahnen 110 aus niederohmigem und wärmeleitendem Kupfer mit dem Verbindungselement 210 elektrisch und thermisch unmittelbar kontaktiert sind.

Aufgrund der breitflächigen und niederohmigen Ausführung der beiden Kontaktflächen 310, 320 können die Wärme bzw. elektrische Ladungen besser von dem Verbindungselement 210 bzw. der Batteriezelle 200 abgenommen und übertragen werden. Dadurch werden die Messergebnisse auch genauer.

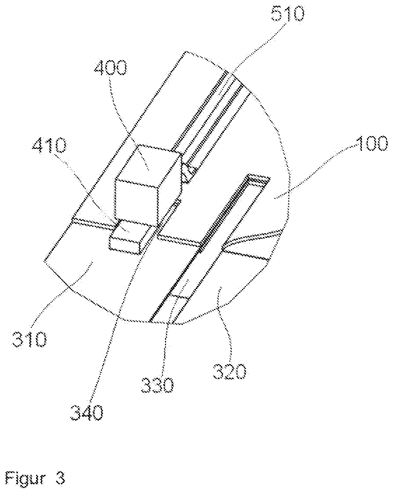

Am Rand der ersten Kontaktfläche 310, wo die Kontaktfläche 310 mit dem restlichen Bereich der Leiterplatte 100 verbunden ist, weist die Kontaktfläche 310 auf der dem Verbindungselement 210 abgewandten Seite einen Temperatursensor 400 auf, welcher über eine wärmeleitende Kontaktstelle 410 mit der ersten Kontaktfläche 310 fest verbunden ist, bspw. gelötet oder geschweißt ist. Diese Kontaktfläche 310 mit dem darüber liegenden Temperatursensor 400 dient zur Messung von Temperatur am Verbindungselement 210 bzw. an der Batteriezelle 200. Ist die dem Verbindungselement 210 abgewandte Seite der ersten Kontaktfläche 310 mit isolierender Deck- bzw. Dichtungsschicht 120, 121 beschichtet, so wird der Bereich 340 (siehe Figur 3), wo die Kontaktstelle 410 des Temperatursensors 400 mit der Kontaktfläche 310 in Berührung kommt, zur besseren Wärmeübertragung von der isolierenden Deck- bzw. Dichtungsschicht 120, 121 befreit.

Signalleiterbahnen 510, die aus dem Temperatursensor 400 ausgehen, verbinden den Temperatursensor 400 mit den restlichen (in den Figuren nicht näher dargestellten) Elektronikkomponenten auf der Leiterplatte 100 elektrisch und dienen als elektrische Abbindung bzw. zur Übertragung von Temperaturmesssignalen.

Die andere Kontaktfläche 320 ohne den Temperatursensor 400, wobei diese Kontaktfläche 320 mit einer breitflächigen Leiterbahn 520 mit (in den Figuren nicht näher dargestellten) elektronischen Bauelementen in der flexiblen Leiterplatte 100 elektrische kontaktiert ist, dient zur Messung des Spannungspotentials (als Spannungsabgriff) bzw. des Stroms am Verbindungselement 210 somit am Anschlusspol der Batteriezelle 200.

Der Temperatursensor 400 samt der Kontaktstelle 410 und vorzugsweise auch die dem Verbindungselement 210 abgewandten Seiten der Kontaktflächen 310, 320 sind durch einen Verguss gegen den äußeren Einfluss verdichtet.

Durch die getrennte Ausführung je einer Kontaktfläche 310, 320 für Temperatur- bzw. Spannungs-/Strommessung ist eine Verfälschung der Messergebnisse bei der Spannungs-/Strommessung durch den Temperatursensor 400 auf der Kontaktfläche 310 vermieden. Da hier sehr geringe Spannungen gemessen werden, kann bspw. ein Temperatursensor 400 auf dem Spannungsabgriff sonst die Spannungsmesswerte verzerren.

Das Energiespeichersystem umfasst also zumindest eine Energiespeicherzelle (Batteriezelle) 200, vorzugsweise zumindest ein Verbindungselement 210, welches auch Anbindungselement oder Zell-Ableitblech genannt, sowie eine flexible Leiterplatte 100 zur Überwachung der Energiespeicherzelle 200. Diese flexible Leiterplatte 100 ist mit der Energiespeicherzelle 200 bzw. mit dem Anbindungselement 210 über eine erste Kontaktfläche 310 verbunden. Diese Kontaktfläche 310 ist ein Teil der Leiterbahn 110 der flexiblen Leiterplatte 100 und so (bzw. in geeigneter Art und Weise, bspw. breitflächig) ausgebildet, dass diese Kontaktfläche 310 die Wärme von der Energiespeicherzelle 200 aufnimmt. An dieser Kontaktfläche 310 weist die flexible Leiterplatte 100 einen Temperatursensor 400 auf, wobei dieser Temperatursensor 400 mit der Kontaktfläche 310 über eine wärmeleitende Kontaktstelle 410 kontaktiert ist und die Temperatur an der Kontaktfläche 310 erfasst.

Ferner ist die Leiterplatte 100 mit der Energiespeicherzelle 200 bzw. mit dem Anbindungselement 210 über eine zweite Kontaktfläche 320 verbunden, welche ebenfalls ein Teil der Leiterbahn 110, 520 der flexiblen Leiterplatte 100 ist und so (bzw. in geeigneter Art und Weise, bspw. breitflächig) ausgebildet ist, dass diese Kontaktfläche 320 die elektrischen Ladungen von der Energiespeicherzelle 200 bzw. dem Anbindungselement 210 aufnimmt, und zur Messung der Spannung oder des Stromes an der Energiespeicherzelle 200 bzw. am Anbindungselement 210 dient.

Die erste und zweite Kontaktfläche 310, 320 sind durch einen zwischen diesen beiden Kontaktflächen 310, 320 angeordneten durchgehenden Schlitz 330 in der flexiblen Leiterplatte 100 voneinander getrennt.

Die dem Anbindungselement 210 zugewandte bzw. mit dem Anbindungselement 210 bzw. der Batteriezelle 200 kontaktierte Seite der beiden Kontaktflächen 310, 320 der flexiblen Leiterplatte 100 ist von der Deck- bzw. Basisschicht 120, 130 befreit, sodass diese Seite der Kontaktflächen 310, 320 die Wärme vom Anbindungselement 210 bzw. von der Batteriezelle 200 besser aufnimmt und mit dem Anbindungselement 210 bzw. der Batteriezelle 200 elektrisch kontaktiert ist.

Die Deck- bzw. Basisschicht 120, 130 der flexiblen Leiterplatte 100 weist an der ersten Kontaktfläche 310 eine Aussparung 340 auf, wobei auf diese Aussparung 340 der Temperatursensor 400 angeordnet und über die Kontaktstelle 410 mit der Kontaktfläche 310 thermisch kontaktiert ist.

### Bezugszeichenliste:

- 100: Flexible Leiterplatte
- 110: Leiterbahn in der flexiblen Leiterplatte 100
- 111: Oberseite der Leiterbahn
- 112: Unterseite der Leiterbahn
- 120: Deckschicht der flexiblen Leiterplatte 100
- 121: Dichtungsschicht der flexiblen Leiterplatte 100
- 130: Basisschicht der flexiblen Leiterplatte 100
- 131: Trägerschicht der flexiblen Leiterplatte 100
- 140: Klebeschicht der flexiblen Leiterplatte 100
- 200: Energiespeicherzelle, Batteriezelle
- 210: Verbindungselement
- 310: Erste Kontaktfläche der Leiterbahn 110
- 320: Zweite Kontaktfläche der Leiterbahn 110
- 330: Schlitz zwischen den ersten und zweiten Kontaktflächen 310, 320
- 340: Aussparung an der ersten Kontaktfläche 310
- 400: Temperatursensor
- 410: Kontaktstelle am Temperatursensor 400
- 510: Signalleiterbahn vom Temperatursensor 400
- 520: Signalleiterbahn zur Messung vom Spannungspotential oder Strom

## Patentansprüche

1. Energiespeichersystem für ein Fahrzeug mit
- einer Energiespeicherzelle (200),
- einem Verbindungselement (210) zur Herstellung einer elektrischen Verbindung zur Energiespeicherzelle (200), **dadurch gekennzeichnet, dass** das Energiespeichersystem aufweist:
- eine flexible Leiterplatte (100) zur Überwachung der Energiespeicherzelle (200),
- wobei diese flexible Leiterplatte (100) mit dem Verbindungselement (210) über eine erste Kontaktfläche (310) kontaktiert ist,
- wobei diese erste Kontaktfläche (310) ein Teil der Leiterbahn (110) der flexiblen Leiterplatte (100) ist und so ausgebildet ist, dass diese Kontaktfläche (310) die Wärme von der Energiespeicherzelle (200) aufnimmt, und
- die flexible Leiterplatte (100) an der ersten Kontaktfläche (310) einen Temperatursensor (400) aufweist,
- wobei dieser Temperatursensor (400) mit der ersten Kontaktfläche (310) über eine wärmeleitende Kontaktstelle (410) kontaktiert ist und die Temperatur an der ersten Kontaktfläche (310) erfasst, wobei
- die Leiterplatte (100) mit dem Verbindungselement (210) über eine zweite Kontaktfläche (320) kontaktiert ist,
- wobei diese zweite Kontaktfläche (320) ein Teil der Leiterbahn (110, 520) der flexiblen Leiterplatte (100) ist und zur Messung des Spannungspotentials oder des Stroms am Verbindungselement (210) dient.

2. Energiespeichersystem nach Anspruch 1, wobei die erste und zweite Kontaktfläche (310, 320) durch einen zwischen diesen beiden Kontaktflächen (310, 320) angeordneten, durchgehenden Schlitz (330) in der flexiblen Leiterplatte (100) voneinander getrennt sind.

3. Energiespeichersystem nach Anspruch 1 oder 2, wobei die dem Verbindungselement (210) zugewandte Seite der ersten Kontaktfläche (310) der flexiblen Leiterplatte (100) von einer Deck- oder Basisschicht (120, 130) befreit ist, sodass diese Seite der ersten Kontaktfläche (310) die Wärme vom Verbindungselement (210) besser aufnimmt.

4. Energiespeichersystem nach einem der vorangehenden Ansprüche, wobei die dem Verbindungselement (210) zugewandte Seite der zweiten Kontaktfläche (320) der flexiblen Leiterplatte (100) von einer Deck- oder Basisschicht (120, 130) befreit ist, sodass diese Seite der zweiten Kontaktfläche (320) mit dem Verbindungselement (210) elektrisch kontaktiert ist.

5. Energiespeichersystem nach einem der vorangehenden Ansprüche, wobei die Deck- oder Basisschicht (120, 130) der flexiblen Leiterplatte (100) an der ersten Kontaktfläche (310) eine Aussparung (340) aufweist, wobei der Temperatursensor (400) in dieser Aussparung (340) angeordnet ist.

6. Vorrichtung zur Messung der Temperatur und Spannung an einer elektrischen / elektronischen Komponente (200),
- **dadurch gekennzeichnet, dass** die Vorrichtung eine flexible Leiterplatte (100) aufweist,
- wobei die flexible Leiterplatte (100) eine erste Kontaktfläche (310) zur Messung von Temperatur an der Komponente (200) und eine zweite Kontaktfläche (320) zur Messung von Spannung bzw. Strom an der Komponente (200) aufweist,
- wobei die erste und zweite Kontaktfläche (310, 320) jeweils ein Teil einer Leiterbahn (110) dieser flexiblen Leiterplatte (100) sind,
- wobei die flexible Leiterplatte (100) über diese beiden Kontaktflächen (310, 320) mit der zu messenden Komponente (200) wärmeleitend bzw. elektrisch kontaktiert ist,
- wobei die beiden Kontaktflächen (310, 320) durch einen in Längsrichtung zu Kontaktflächen (310, 320) durchgehenden Schlitz (330) voneinander seitlich getrennt sind.

7. Vorrichtung nach Anspruch 6, wobei die flexible Leiterplatte (100) an der ersten Kontaktfläche (310) einen Temperatursensor (400) aufweist, wobei dieser Temperatursensor (400) mit der ersten Kontaktfläche (310) über eine wärmeleitende Kontaktstelle (410) kontaktiert ist und die Temperatur an der ersten Kontaktfläche (310) erfasst.

8. Vorrichtung nach Anspruch 6 oder 7, wobei die der zu messenden Komponente (200) zugewandte bzw. mit der Komponente (200) kontaktierte Seite der beiden Kontaktflächen (310, 320) der flexiblen Leiterplatte (100) von der Deck- bzw. Basisschicht (120,130), welche die restliche Fläche der flexiblen Leiterplatte (100) abdeckt und isoliert, befreit ist.

9. Vorrichtung nach Anspruch 7 oder 8, wobei die Deck- bzw. Basisschicht (120, 130) der flexiblen Leiterplatte (100) an der ersten Kontaktfläche (310) eine Aussparung (340) aufweist, wobei der Temperatursensor (400) auf dieser Aussparung (340) angeordnet und über die Kontaktstelle (410) mit der ersten Kontaktfläche (310) thermisch kontaktiert ist.

## Claims

1. Energy storage system for a vehicle, comprising
- an energy storage cell (200),
- a connecting element (210) for establishing an electrical connection to the energy storage cell (200),
**characterized in that** the energy storage system has:
- a flexible printed circuit board (100) for monitoring the energy storage cell (200),
- wherein the connecting element (210) makes contact with this flexible printed circuit board (100) by means of a first contact area (310),
- wherein this first contact area (310) is a part of the conductor track (110) of the flexible printed circuit board (100) and is designed such that this contact area (310) absorbs the heat from the energy storage cell (200), and
- the flexible printed circuit board (100) has a temperature sensor (400) on the first contact area (310),
- wherein the first contact area (310) makes contact with this temperature sensor (400) by means of a thermally conductive contact point (410) and the said temperature sensor detects the temperature at the first contact area (310), wherein
- the connecting element (210) makes contact with the printed circuit board (100) by means of a second contact area (320),
- wherein this second contact area (320) is a part of the conductor track (110, 520) of the flexible printed circuit board (100) and serves to measure the voltage potential or the current across the connecting element (210).

2. Energy storage system according to Claim 1, wherein the first and the second contact area (310, 320) are separated from one another by a continuous slot (330), which is arranged between these two contact areas (310, 320), in the flexible printed circuit board (100).

3. Energy storage system according to Claim 1 or 2, wherein that side of the first contact area (310) of the flexible printed circuit board (100) which faces the connecting element (210) is freed from a covering or base layer (120, 130), so that this side of the first contact area (310) absorbs the heat from the connecting element (210) more effectively.

4. Energy storage system according to one of the preceding claims, wherein that side of the second contact area (320) of the flexible printed circuit board (100) which faces the connecting element (210) is freed from a covering or base layer (120, 130), so that the connecting element (210) makes electrical contact with this side of the second contact area (320) .

5. Energy storage system according to one of the preceding claims, wherein the covering or base layer (120, 130) of the flexible printed circuit board (100) has a cutout (340) on the first contact area (310), wherein the temperature sensor (400) is arranged in this cutout (340).

6. Apparatus for measuring the temperature and voltage across an electrical/electronic component (200),
**characterized in that** the apparatus has a flexible printed circuit board (100),
- wherein the flexible printed circuit board (100) has a first contact area (310) for measuring the temperature at the component (200) and a second contact area (320) for measuring voltage or current across the component (200),
- wherein the first and the second contact area (310, 320) are each a part of a conductor track (110) of this flexible printed circuit board (100),
- wherein the component (200) to be measured makes thermally conductive and/or electrical contact with the flexible printed circuit board (100) by means of these two contact areas (310, 320),
- wherein the two contact areas (310, 320) are laterally separated from one another by a slot (330) which is continuous in the longitudinal direction in relation to contact areas (310, 320).

7. Apparatus according to Claim 6, wherein the flexible printed circuit board (100) has a temperature sensor (400) on the first contact area (310), wherein the first contact area (310) makes contact with this temperature sensor (400) by means of a thermally conductive contact point (410), and the said temperature sensor detects the temperature at the first contact area (310).

8. Apparatus according to Claim 6 or 7, wherein that side of the two contact areas (310, 320) of the flexible printed circuit board (100) which faces the component (200) to be measured or with which contact is made by the component (200) is freed from the covering or base layer (120, 130) which covers and insulates the remaining area of the flexible printed circuit board (100).

9. Apparatus according to Claim 7 or 8, wherein the covering or base layer (120, 130) of the flexible printed circuit board (100) has a cutout (340) on the first contact area (310), wherein the temperature sensor (400) is arranged on this cutout (340) and the first contact area (310) makes thermal contact with the said temperature sensor by means of the contact point (410).

## Revendications

1. Système d'accumulateur d'énergie pour un véhicule, comprenant
- une cellule d'accumulateur d'énergie (200),
- un élément de liaison (210) destiné à établir une liaison électrique avec la cellule d'accumulateur d'énergie (200), **caractérisé en ce que** le système d'accumulateur d'énergie possède :
- un circuit imprimé souple (100) destiné à la surveillance de la cellule d'accumulateur d'énergie (200),
- ce circuit imprimé souple (100) étant mis en contact avec l'élément de liaison (210) par le biais d'une première surface de contact (310),
- cette première surface de contact (310) étant une partie de la piste conductrice (110) du circuit imprimé souple (100) et étant configurée de telle sorte que cette surface de contact (310) absorbe la chaleur de la cellule d'accumulateur d'énergie (200), et
- le circuit imprimé souple (100) possédant une sonde de température (400) au niveau de la première surface de contact (310),
- cette sonde de température (400) étant mise en contact avec la première surface de contact (310) par le biais d'un point de contact (410) thermoconducteur et détectant la température au niveau de la première surface de contact (310),
- le circuit imprimé (100) étant mis en contact avec l'élément de liaison (210) par le biais d'une deuxième surface de contact (320),
- cette deuxième surface de contact (320) étant une partie de la piste conductrice (110, 520) du circuit imprimé souple (100) et servant à la mesure du potentiel de tension ou du courant au niveau de l'élément de liaison (210).

2. Système d'accumulateur d'énergie selon la revendication 1, la première et la deuxième surface de contact (310, 320) étant séparées l'une de l'autre par une entaille (330) continue dans le circuit imprimé souple (100) disposée entre ces deux surfaces de contact (310, 320).

3. Système d'accumulateur d'énergie selon la revendication 1 ou 2, le côté de la première surface de contact (310) du circuit imprimé souple (100) qui fait face à l'élément de liaison (210) étant dépourvu d'une couche de recouvrement ou de base (120, 130), de sorte que ce côté de la première surface de contact (310) absorbe mieux la chaleur de l'élément de liaison (210).

4. Système d'accumulateur d'énergie selon l'une des revendications précédentes, le côté de la deuxième surface de contact (320) du circuit imprimé souple (100) qui fait face à l'élément de liaison (210) étant dépourvu d'une couche de recouvrement ou de base (120, 130), de sorte que ce côté de la deuxième surface de contact (320) est mis en contact électrique avec l'élément de liaison (210).

5. Système d'accumulateur d'énergie selon l'une des revendications précédentes, la couche de recouvrement ou de base (120, 130) du circuit imprimé souple (100) possédant une réservation (340) au niveau de la première surface de contact (310), la sonde de température (400) étant disposée dans cette réservation (340).

6. Dispositif pour mesurer la température et la tension au niveau d'un composant électrique / électronique (200), **caractérisé en ce que**
- le dispositif possède un circuit imprimé souple (100),
- le circuit imprimé souple (100) possède une première surface de contact (310) destinée à mesurer la température au niveau du composant (200) et une deuxième surface de contact (320) destinée à mesurer la tension ou le courant au niveau du composant (200),
- la première et la deuxième surface de contact (310, 320) étant respectivement une partie d'une piste conductrice (110) de ce circuit imprimé souple (100),
- le circuit imprimé souple (100) étant mis en contact thermoconducteur ou électrique avec le composant (200) à mesurer par le biais de ces deux surfaces de contact (310, 320),
- les deux surfaces de contact (310, 320) étant séparées latéralement l'une de l'autre par une entaille (330) continue dans le sens longitudinal des surfaces de contact (310, 320).

7. Dispositif selon la revendication 6, le circuit imprimé souple (100) possédant une sonde de température (400) au niveau de la première surface de contact (310), cette sonde de température (400) étant mise en contact avec la première surface de contact (310) par le biais d'un point de contact (410) thermoconducteur et détectant la température au niveau de la première surface de contact (310).

8. Dispositif selon la revendication 6 ou 7, le côté des deux surfaces de contact (310, 320) du circuit imprimé souple (100) qui font face au composant (200) à mesurer ou qui est mis en contact avec le composant (200) étant dépourvu de la couche de recouvrement ou de base (120, 130) qui recouvre et isole le reste de la surface du circuit imprimé souple (100).

9. Dispositif selon la revendication 7 ou 8, la couche de recouvrement ou de base (120, 130) du circuit imprimé souple (100) possédant une réservation (340) au niveau de la première surface de contact (310), la sonde de température (400) étant disposée sur cette réservation (340) et étant mise en contact thermique avec la première surface de contact (310) par le biais du point de contact (410).
